# EUROPEAN PATENT APPLICATION

(11) **EP 2 636 889 A1**
(43) Date of publication of application: **11.09.2013**
(21) Application number: 12158408.0
(22) Date of filing: 07.03.2012
(51) Int. Cl.: F03D 1/06

(54) **Arrangement to reduce noise originated by a wind turbine blade**

(71) Applicant: Siemens Aktiengesellschaft, 80333 München (DE)
(72) Inventor: Enevoldsen, Peder Bay, 7100 Vejle (DK); Kirkegaard, Jeppe Funk, 7400 Herning (DK)

(57) **Abstract**

The invention relates to an arrangement to reduce aerodynamic noise, which is originated by a wind turbine blade.

The blade comprises a first panel and a second panel. The first panel and the second panel are arranged in an adjacent manner at the trailing edge of the blade. The panels extend partly into the ambient air flow of the blade. A gap is arranged between the first panel and the second panel, while the size of the gap is defined by its width and by that part of the adjacent panels extending into the air flow. The size of the gap is adjusted in a way that the origination of whistle tones by the gap is reduced or even avoided while the aerodynamic characteristic of the blade is improved by the panels.

## Description

The invention relates to an arrangement to reduce aerodynamic noise, which is originated by a wind turbine blade.

EP 1 314 885 discloses a flexible serrated trailing edge of a wind turbine. A serrated panel is connected at the trailing edge of the blade to optimize the aerodynamic characteristics of the wind turbine blade. This results in an increased electrical output power of the wind turbine for example.

The shape of the trailing edge even influences the noise or the aerodynamic noise, which is originated by the wind turbine blade.

Thus the dimension and the shape of a panel, which is attached to the trailing edge, even contribute to the aerodynamic noise of the turning wind turbine blade. Thus a compromise needs to be found between the location and the dimension of the panel for an improved blade-characteristic on the one hand and a reduced aerodynamic noise on the other hand.

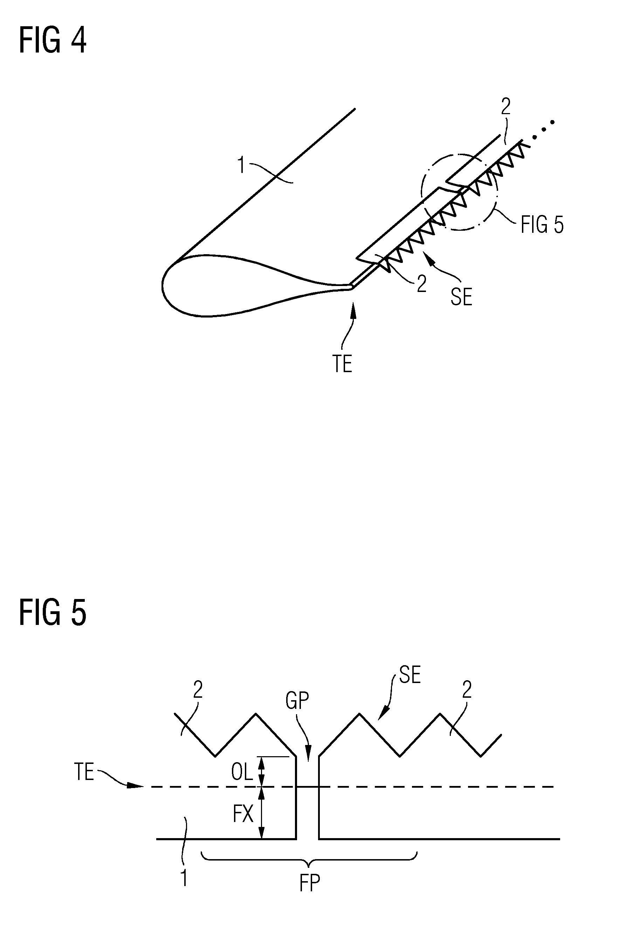

FIG 4 shows a blade 1 of a wind turbine. A number of panels 2 are arranged at and along the trailing edge TE of the blade 1. The panels 2 show a number of serrations SE. the size and the shape of the panels are optimized in a way that a lift-drag-ratio of the blade is increased. Thus the aerodynamic characteristics of the blade 1 are improved.

The panels 2 might connected by a glue with the trailing edge TE. Thus retrofitting of existing blades in dependency of specific conditions of the site of the wind turbine is quite easy.

The panels 2 may be made in smaller sections and may be attached side by side as illustrated. Thus an entire flap, arranged at the trailing edge TE of the blade, is established or constituted.

FIG 5 shows a specific detail of FIG 4, which is indicated by a circle there.

The flap FP as shown here in detail comprises several panels 2. This allows a flexible movement of the serrated panels 2 when the wind turbine is in operational mode. Due to the flexing of the serrated panels the blade characteristics are improved.

There is a little gap GP between two adjacent panels 2. The gap GP is needed for the flexing movement of the panels 2.

Additionally the panels 2 are connected with the trailing edge TE by a band or strip or connection-area FX. This connection-area FX is preferably used for a glue-connection.

Another band or strip OL is arranged between the connection area FX and the serrations SE, thus a kind of "overhang" or projection OL is created.

The little gap GP between the panels 2 generates a whistle-tone as aerodynamic noise. The whistle-tone is even influenced by the dimension of the strip OL or overhang OL.

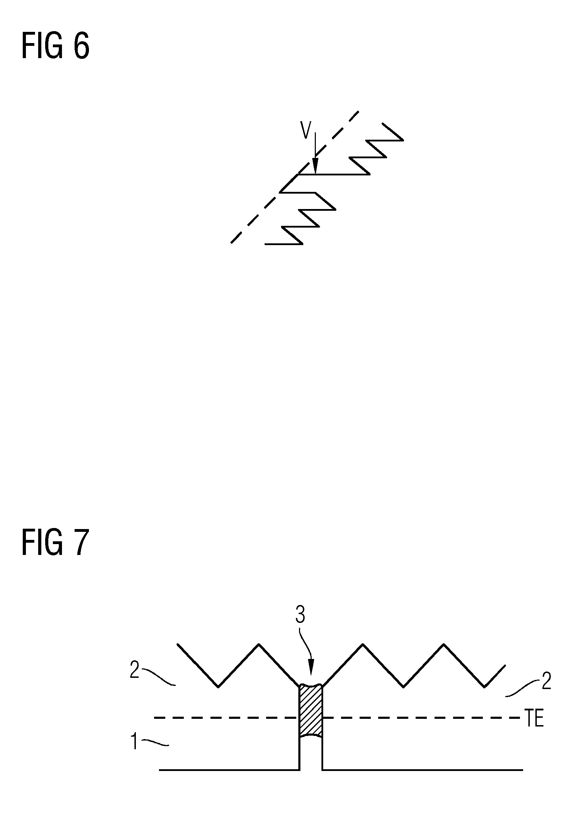

The whistle tone is originated by the wind V, which is slipping through the gap GP. This is schematically shown in FIG 6.

FIG 7 refers to the FIG 5 and shows a well known prior art solution to reduce this whistle-tone.

The gap GP between the panels 2 is filled with a flexible filler material 3.

However the filler material 3 deteriorates over time and becomes stiff and inflexible. Thus the filler material 3 finally might fall off.

The usage of the filler material even results in time extensive work thus this solution is expensive.

It is therefore the aim of the invention to provide an improved arrangement to reduce or even avoid noise, which is originated by a wind turbine blade.

This aim is solved by the features of claim 1. Preferred configurations are addressed by the dependent claims.

According to the invention an arrangement is provided to reduce aerodynamic noise, which is originated by a wind turbine blade.

The blade comprises a first panel and a second panel. The first panel and the second panel are arranged in an adjacent manner at the trailing edge of the blade. The panels extend partly into the ambient air flow of the blade.

A gap is arranged between the first panel and the second panel, while the size of the gap is defined by its width and by that part of the adjacent panels extending into the air flow.

The size of the gap is adjusted in a way that the origination of whistle tones by the gap is reduced or even avoided while the aerodynamic characteristic of the blade is improved by the panels.

Thus the size of the gap is narrowed and reduced in a way that the slipping of wind through the gap is influenced in a positive manner.

The size of the gap is preferably adjusted by the width of the gap and/or by the depth of the gap.

In a preferred configuration the panels are arranged and shaped in a way that the aerodynamic characteristic of the blade is improved while at the same time the noise, which is originated by the blade, is reduced.

In a preferred configuration the panels are arranged and prepared for a flexing movement of the panels. Thus the aerodynamic characteristic of the blade is improved.

In a preferred configuration the panels comprise a number of serrations, which are arranged and shaped in a way that the aerodynamic characteristic of the blade is improved.

In a preferred configuration the panels are connected with the trailing edge by a glued connection. Thus retrofitting of existing blades with panels is possible.

The arrangement invented allows a trade-off between optimized aerodynamic characteristics of the blade on the one hand and an optimized noise-reduction on the other hand.

The invention results in a long-term and quite stable arrangement avoiding unreliable and weak parts, which were used before - like filler material for example.

The invention allows the reduction of working time and thus the reduction of costs.

The invention can be used for each shaped panel. It does not matter if the panel is serrated or not. Thus a wide range of panels can be used optimize the blade.

Even an optimized retrofitting of existing blades by panels is supported by the arrangement invented.

The invention is shown in more detail by help of figures.
FIG 1 shows a blade with panels as starting point for the arrangement invented,
FIG 2 shows the attached panels according to the invention,
FIG 3 shows a detail of the attached panels in reference to FIG 2, and
FIG 4 to FIG 7 show the prior art discussed in the introduction of this description.

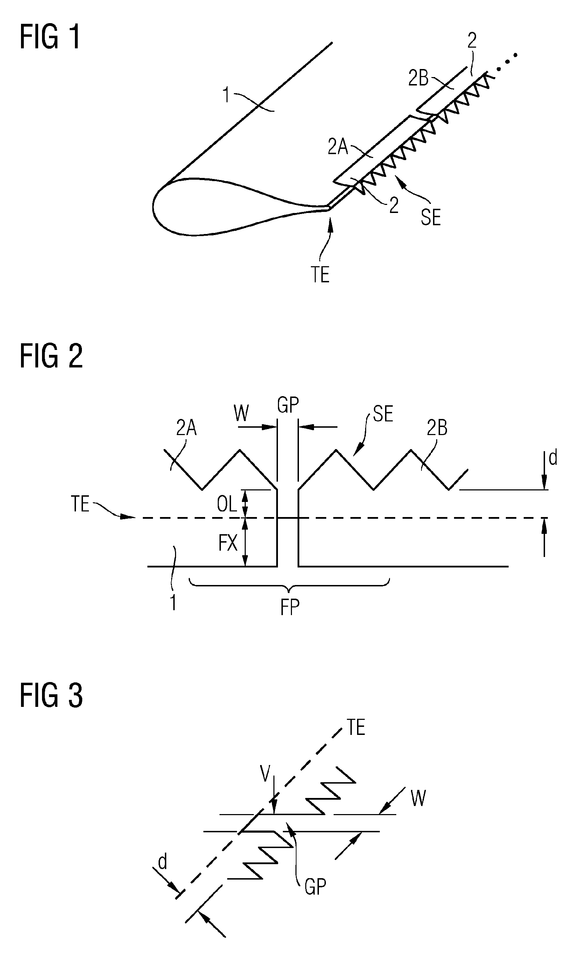

FIG 1 shows a blade 1 with panels 2, 2A and 2B as starting point for the arrangement invented.

A number of panels 2 are arranged at and along the trailing edge TE of the blade 1. The panels 2 show a number of serrations SE.

The size and the shape of the panels 2 are optimized in a way that a lift-drag-ratio of the blade 1 is increased. Thus the aerodynamic characteristics of the blade 1 are improved.

The panels 2 might be connected by glue with the trailing edge TE. Thus retrofitting of existing blades 1 in dependency of specific conditions of the site of the wind turbine is quite easy.

The panels 2 may be made in smaller sections and may be attached side by side as illustrated.

Thus an entire flap, arranged at the trailing edge TE of the blade 1, is established or constituted.
FIG 1 shows a first panel 2A and a second panel 2b, which are adjacent to each other.
FIG 2 shows the attached panels 2A and 2B according to the invention. Reference is made to FIG 1 and to the circle shown there.

The panels 2A and 2B are arranged in adjacent manner as shown in FIG 1.

There is a gap GP between the first panel 2A and the second panel 2B.

The gap GP is adjusted in its size in a way that the origination of whistle tones by the gap GP is reduced or even avoided.

A flap FP as shown here comprises the two panels 2A and 2B. The spaced panels allow a flexible movement of the serrated panels 2 and of the flap FP. Due to the flexible movement the aerodynamic characteristics of the blade are improved.

Each panel 2A, 2B is divided into a first section FX and into a second section OL.

The zone of the first section FX is used to be connected with the trailing edge TE. The section FX is defined by its depth, which is used for the connection.

The second section OL is arranged between the serrations SE and the first section FX. This second section OL is a transition zone between the first section FX and the edges of the serrations SE, which are close to the trailing edge TE. Thus the second section OL is a kind of "overhang" or projection, which extends between the trailing edge TE and the serrations SE.

Thus the size of the gap GP is defined by the width w of the gap and by the depth d of the second section OL, which extends between the trailing edge TE and the serrations SE. This is shown in FIG 3.

The size of the gap GP is now adjusted in a way that whistle tones, which are originated by the wind V passing through the gap GP, is reduced or are even avoided.

## Claims

1. Arrangement to reduce noise, which is originated by a wind turbine blade (1),
- wherein the blade (1) comprises a first panel (2,2A) and a second panel (2,2B),
- wherein the first panel (2,2A) and the second panel (2,2B) are arranged in an adjacent manner at the trailing edge (TE) of the blade (1) and wherein the panels (2, 2A,2B) extend partly into the ambient air flow of the blade (1),
- wherein a gap (GP) is arranged between the first panel (2,2A) and the second panel (2,2B), while the size of the gap (GP) is defined by its width (w) and by that part (d) of the adjacent panels (2,2A,2B) extending into the air flow,
- wherein the size of the gap (GP) is adjusted in a way that the origination of whistle tones by the gap (GP) is reduced or even avoided while the aerodynamic characteristic of the blade (1) is improved by the panels.

2. Arrangement according to claim 1,
- wherein the panel (2,2A,2B) comprises a first section (FX) and a second section (OL),
- wherein the first section (FX) is prepared for a connection of the panel (2,2A,2B) at the trailing edge (TE), and
- wherein the second section (OL) extends into the air flow by a certain depth (OL), while the depth (OL) is adjusted to influence the noise originated and the aerodynamic characteristic.

3. Arrangement according to claim 1, wherein the width (W) of the gap (GP) is adjusted to influence the noise originated and the aerodynamic characteristic.

4. Arrangement according to claim 2 or claim 3,
- wherein the panel (2,2A,2B) comprises serrations (SE), which are arranged and shaped in a way that the aerodynamic characteristic of the blade (1) is improved, and
- wherein the second section (OL) is a transition zone between the first section (FX) and the serrations (SE) of the panel (2,2A,2B).

5. Arrangement according to one of the claims 1 to claim 4, wherein the panels (2,2A,2B) are arranged and prepared for a flexing movement of the panels (2,2A,2B).

6. Arrangement according to claim 1, wherein the panels (2,2A,2B) are arranged and shaped in a way that the aerodynamic characteristic of the blade (1) is improved.

7. Arrangement according to claim 1, wherein the panels (2,2A,2B) comprises a number of serrations (SE), which are arranged and shaped in a way that the aerodynamic characteristic of the blade (1) is improved.

8. Arrangement according to one of the claims 1 to claim 6, wherein the panels (2,2A,2B) are connected with the trailing edge (TE) by a glued connection.
